# EUROPÄISCHE PATENTSCHRIFT

(11) **EP 2 859 745 B1**
(45) Veröffentlichungstag und Bekanntmachung des Hinweises auf die Patenterteilung: **27.12.2017**
(21) Anmeldenummer: 13728995.5
(22) Anmeldetag: 03.06.2013
(51) Int. Cl.: H04W 8/00

(54) **VERFAHREN UND NETZWERK-SYSTEM ZUR EFFEKTIVEN IDENTIFIZIERUNG VON BENACHBARTEN KNOTEN**
METHOD AND NETWORK SYSTEM FOR EFFECTIVE IDENTIFICATION OF ADJACENT NODES
PROCÉDÉ ET SYSTÈME RÉSEAU PERMETTANT D'IDENTIFIER EFFICACEMENT DES NOEUDS VOISINS

(30) Priorität: 11.06.2012 DE 102012209680
(43) Veröffentlichungstag der Anmeldung: 15.04.2015
(73) Patentinhaber: Rohde & Schwarz GmbH & Co. KG, 81671 München (DE)
(72) Erfinder: PFEIFER, Hagen, 80687 München (DE); GLAESER, Gerhard, 40764 Langenfeld (DE)
(74) Vertreter: Körfer, Thomas
(86) Internationale Anmeldenummer: PCT/EP2013/061400
(87) Internationale Veröffentlichungsnummer: WO 2013/186075

(56) Entgegenhaltungen:
- GB-A- 2 423 891
- YOO JOON ET AL: "Control overhead reduction for neighbour knowledge acquisition in mobile ad hoc networks", ELECTRONICS LETTERS, IEE STEVENAGE, GB, Bd. 39, Nr. 9, 1. Mai 2003 (2003-05-01), Seiten 740-741, XP006020280, ISSN: 0013-5194, DOI: 10.1049/EL:20030465

## Beschreibung

Die Erfindung betrifft ein Verfahren zur effektiven Identifizierung von benachbarten Knoten in einem mobilen ad-hoc-Netzwerk, somit ein entsprechendes Netzwerk.

In mobilen Netzwerken ohne Infrastruktur - so genannte ad-hoc-Netzwerke - wird das Management, die Überwachung und die Kontrolle des Datenverkehrs direkt zwischen den einzelnen Netzteilnehmern - den so genannten Netzknoten bzw. Knoten - abgewickelt.

Eine wesentliche Funktion ist hierbei die Planung des Übertragungsweges vom sendenden Knoten zum empfangenden Knoten, das so genannte Routing. Das Routing zwischen dem sendenden Knoten und dem empfangenden Knoten kann hierbei typischerweise über mehrere Zwischen-Knoten erfolgen. Für ein derartiges Multi-Hop-Routing haben sich prinzipiell zwei Klassen von Routing-Verfahren etabliert.

Beim proaktiven Routing werden in einer bestimmten Zeitraster jeweils die direkten Nachbar-Knoten jedes einzelnen Knoten in einem Ad-hoc-Netzwerk ermittelt und in einer Routing-Tabelle abgelegt, die über ausgewählte Knoten allen Knoten eines ad-hoc-Netzwerkes bekannt gemacht wird. Beim reaktiven Routing werden dagegen die jeweiligen Nachbar-Knoten jedes einzelnen Knotens im Übertragungskorridor zwischen dem sendenden Knoten und dem empfangenden Knoten einmalig bei einem Übertragungswunsch eines Knotens kurz vor der Übertragung ermittelt und den einzelnen Knoten im Übertragungskorridor mitgeteilt.

Der Datenverkehr zur Ermittlung der Nachbar-Knoten jedes einzelnen Knotens und der Datenverkehr zur Bekanntmachung der jeweiligen Nachbar-Knoten jedes einzelnen Knotens im gesamten ad-hoc-Netzwerk benötigt Übertragungskapazität, die die Übertragungseffizienz im ad-hoc-Netzwerk deutlich minimiert. Andererseits ist ein mobiles ad-hoc-Netzwerk aufgrund der Zugänge und/oder Abgänge von Netz-Knoten zum mobilen ad-hoc-Netzwerk typischerweise hoch veränderlich und erfordert eine kontinuierliche und schnelle Aktualisierung des für das proaktive Routing-Verfahren erforderlichen Wissens über die zu jedem Knoten des ad-hoc-Netzwerkes jeweils direkt benachbart positionierten Knoten. Für bestehende proaktive Routing-Verfahren wird die Topologie des ad-hoc-Netzwerkes - d.h. die Kenntnis über die Verteilung der einzelnen Knoten in dem ad-hoc-Netzwerk - deshalb in einem Zeitraster ermittelt, das einen Kompromiss zwischen dem Aktualitätsgrad der Topologie des ad-hoc-Netzwerkes und der Übertragungseffizienz im ad-hoc-Netzwerk darstellt. Eine derartige zyklische Identifizierung einer Topologie in einem ad-hoc-Netzwerk geht beispielsweise aus der WO 2011/154911 A1 hervor.

Für einen Knoten, der sich außerhalb eines ad-hoc-Netzwerkes befindet und sich deshalb möglichst schnell in ein bestehendes ad-hoc-Netzwerk integrieren möchte oder mit einem ebenfalls außerhalb eines ad-hoc-Netzwerkes befindlichen weiteren Knoten ein neues ad-hoc-Netzwerk gründen möchte, ist es nicht tragbar, seine Anwesenheit potentiellen Nachbar-Knoten lediglich in einem aufgrund des Kompromisses verlängerten Zeitraster anzukündigen.

Dokument GB 2 423 891 A beschreibt ein Verfahren und eine Vorrichtung zur Identifizierung von Nachbarknoten in einem mobilen ad-hoc-Netzwerk, in dem ein TDMA-Zugriffsverfahren benutzt wird. Zur Identifizierung von Nachbarknoten werden sogenannte "Hallo"-Nachrichten von jedem Netzknoten eines bestehenden ad-hoc-Netzwerkes benutzt. Beim Empfang einer "Hallo"-Nachricht durch einen potentiellen Nachbarknoten wird diese vom Nachbartknoten mit einer Quittierung-Nachricht (Acknowledgment (ACK)) quittiert. Die "Hallo"-Nachricht eines Netzknotens des ad-hoc-Netzes, die einer Nachricht zur Signalisierung einer Anwesenheit entspricht, werden in jeweils einem bestimmten Zeitschlitz aus insgesamt K*L Zeitschlitzen einer TDMA-Periode gesendet, die jeweils dem jeweiligen Netzknoten des ad-hoc-Netzwerkes exklusiv zugewiesen wird.

Aufgabe der Erfindung ist es deshalb, ein Verfahren zur Ermittlung der Topologie eines ad-hoc-Netzwerkes und ein zugehöriges Netzwerk-System zu schaffen, um ein möglichst schnelles Einbinden eines sich außerhalb eines ad-hoc-Netzwerkes befindlichen Knoten in ein ad-hoc-Netzwerk zu ermöglichen.

Die Aufgabe wird durch ein erfindungsgemäßes Verfahren zur effektiven Identifizierung von benachbarten Knoten in einem mobilen ad-hoc-Netzwerk mit den Merkmalen des Patentanspruchs 1 und durch ein zugehöriges erfindungsgemäßes Netzwerk-System mit einem ad-hoc-Netzwerk mit den Merkmalen des Patentanspruchs 12 gelöst. Vorteilhafte technische Weiterbildungen sind in den jeweils abhängigen Patentansprüchen aufgeführt.

Ausgehend von einem Szenario, bei dem jeder Knoten seine Anwesenheit im ad-hoc-Netzwerk durch Aussenden einer Nachricht zur Signalisierung einer Anwesenheit - typischerweise einer so genannten "Hallo-Nachricht" - in einem bestimmten konstanten Zeitraster anzeigt, die von jedem weiteren Knoten des ad-hoc-Netzwerkes, der die Nachricht zur Signalisierung einer Anwesenheit erstmalig empfängt, mit einer Quittierungs-Nachricht quittiert wird, sendet ein Knoten, der sich außerhalb eines ad-hoc-Netzwerkes befindet, erfindungsgemäß die Nachricht zur Signalisierung einer Anwesenheit in einem variierten Zeitraster aus.

Die erfindungsgemäße Variation des Zeitrasters, in dem ein außerhalb eines ad-hoc-Netzwerkes befindlicher Knoten eine Nachricht zur Signalisierung einer Anwesenheit aussendet, ermöglicht ein möglichst schnelles Bekanntmachen des außerhalb eines ad-hoc-Netzwerkes befindlichen Knotens bei potentiellen Nachbar-Knoten und somit ein möglichst schnelles sich Einbinden des außerhalb eines ad-hoc-Netzwerkes befindlichen Knotens in ein ad-hoc-Netzwerk mit mindestens einem potentiellen Nachbar-Knoten.

Der außerhalb eines ad-hoc-Netzwerkes befindliche Knoten, der entweder durch Aufnahme des Betriebs, d.h. beispielsweise durch Einschalten der Betriebsspannung, in eine Position außerhalb eines ad-hoc-Netzwerkes oder bei bereits aufgenommenen Betrieb von einer Position innerhalb eines ad-hoc-Netzwerkes in eine Position außerhalb eines ad-hoc-Netzwerkes gelangt, wird bevorzugt zuerst ein vergleichsweise längeres Zeitraster zum Aussenden einer Nachricht zur Signalisierung einer Anwesenheit wählen, um frühzeitig - noch vor dem Aussenden einer eigenen Nachricht zur Signalisierung einer Anwesenheit - eine von einem potentiellen Nachbar-Knoten gesendete Nachricht zur Signalisierung einer Anwesenheit erstmalig zu empfangen und mit einer Quittierungs-Nachricht zu quittieren.

Da ein gemeinsames ad-hoc-Netzwerk zwischen zwei Knoten ab dem Zeitpunkt realisiert ist, in dem sich die beiden Knoten gegenseitig bekannt gemacht haben, stellt das Quittieren einer von einem Nachbar-Knoten empfangenen Nachricht zur Signalisierung einer Anwesenheit durch Versenden einer Quittierungs-Nachricht die schnellste Möglichkeit für einen außerhalb eines ad-hoc-Netzwerk befindlichen Knoten dar, sich in ein bestehendes ad-hoc-Netzwerk einzubinden oder ein neues ad-hoc-Netzwerk zu gründen, da lediglich noch das Versenden einer Quittierungs-Nachricht erforderlich ist.

Mit fortschreitender Zeit, in der die Wahrscheinlichkeit für den Empfang einer von einem potentiellen Nachbar-Knoten versendeten Nachricht zur Signalisierung einer Anwesenheit abnimmt, wird der außerhalb eines ad-hoc-Netzwerkes befindliche Knoten das Zeitraster, in dem er eine Nachricht zur Signalisierung einer Anwesenheit aussendet, bevorzugt reduzieren, um sich möglichst frühzeitig einem potentiellen Nachbar-Knoten bekannt zu machen, mit ihm in Kontakt zu kommen und somit sich in ein bestehendes ad-hoc-Netzwerk mit dem potentiellen Nachbar-Knoten einzubinden oder ein neues ad-hoc-Netzwerk mit einem potentiellen Nachbar-Knoten zu gründen.

Die Reduzierung des Zeitrasters wird vorzugsweise solange fortgesetzt, bis das Zeitraster einen vorab festgelegten minimalen Wert erreicht. Dieses minimalwertige Zeitraster behält der außerhalb eines ad-hoc-Netzwerkes befindliche Knoten solange bei, bis er in dem ad-hoc-Netzwerk integriert ist.

Um die Einbindung eines außerhalb eines ad-hoc-Netzwerkes befindlichen Knotens in ein bestehendes ad-hoc-Netzwerk oder die Gründung eines neuen ad-hoc-Netzwerkes zwischen zwei außerhalb eines ad-hoc-Netzwerkes befindlichen Knoten zusätzlich zu beschleunigen, wird jede von einem Knoten empfangene Nachricht zu Signalisierung einer Anwesenheit bevorzugt schnellstmöglich mit einer Quittierungs-Nachricht quittiert.

In einer ersten bevorzugten Variante der Erfindung erfolgt die Quittierung mit einer Quittierungs-Nachricht sofort nach dem Empfang einer Nachricht zur Signalisierung einer Anwesenheit. In einer zweiten bevorzugten Variante der Erfindung wird die Quittierung mit einer Quittierungs-Nachricht geringfügig um eine dem jeweiligen Knoten zugeordnete statistische Verzögerungszeit verzögert, um ein gleichzeitiges Quittieren der Nachricht zur Signalisierung einer Anwesenheit durch mehrere diese Nachricht zur Signalisierung einer Anwesenheit empfangenden Knoten und damit eine Blockade im ad-hoc-Netzwerk zu unterbinden.

Der Zeitpunkt des Empfangs einer Quittierungs-Nachricht beim Knoten, der die zu quittierende Nachricht zur Signalisierung einer Anwesenheit gesendet hat, stellt bevorzugt den Zeitpunkt des Beginns eines ad-hoc-Netzwerkes zwischen dem die Nachricht zur Signalisierung einer Anwesenheit sendenden Knoten und dem die Nachricht zur Signalisierung einer Anwesenheit mit einer Quittierungs-Nachricht quittierenden Knoten sowie zusätzlichen Knoten dar, die jeweils mit einem der beiden Knoten ein bestehendes ad-hoc-Netzwerk bereits betreiben.

Ein Knoten, der eine empfangene Nachricht zur Signalisierung einer Anwesenheit mit einer Quittierungs-Nachricht quittiert, weiß somit, dass er in Kürze in einem ad-hoc-Netzwerk integriert ist, und wird deshalb vorzugsweise ab dem Zeitpunkt der Versendung einer Quittierungs-Nachricht wie jeder andere Knoten, der einem ad-hoc-Netzwerk angehört, seine Nachrichten zur Signalisierung seiner Anwesenheit in einem vorab festgelegten konstanten Zeitraster versenden. Äquivalent wird ein Knoten, der eine Quittierungs-Nachricht empfängt und somit weiß, dass er inzwischen einem ad-hoc-Netzwerk angehört, sofern er nicht schon einem ad-hoc-Netzwerk angehört, somit vorzugsweise ab dem Zeitpunkt des Empfangs einer Quittierungs-Nachricht wie jeder andere Knoten, der einem ad-hoc-Netzwerk angehört, seine Nachrichten zur Signalisierung seiner Anwesenheit in einem vorab festgelegten konstanten Zeitraster versenden.

Erhält ein Knoten, der eine Nachricht zur Signalisierung seiner Anwesenheit aussendet und sich wissentlich zu diesem Zeitpunkt in einem ad-hoc-Netzwerk befindet, innerhalb eines vorab festgelegten Zeitintervalls keine Nachricht zur Signalisierung einer Anwesenheit von einem anderen Knoten des ad-hoc-Netzwerkes, so befindet er sich wissentlich außerhalb eines ad-hoc-Netzwerkes.

Während die Bildung eines ad-hoc-Netzwerkes zwischen mindestens zwei Knoten mit dem Empfang der Quittierungs-Nachricht eines der beiden Knoten beim jeweils anderen der beiden Knoten aktiviert ist, ist eine gesicherte bidirektionale Übertragung zwischen diesen beiden Knoten - d.h. das Vorliegen einer gesicherten symmetrischen Übertragung zwischen den beiden Knoten - vorzugsweise erst gegeben, wenn beide Knoten wissen, dass ihre gesendete Nachricht vom jeweils anderen Knoten korrekt empfangen wird. Dies ist bevorzugt erst dann der Fall, wenn einer der beiden Knoten eine weitere Quittierungs-Nachricht empfängt, die der jeweils andere Knoten beim Empfang der vom einen der beiden Knoten versendeten Quittierungs-Nachricht verschickt.

Bevorzugt findet das erfindungsgemäße Verfahren zur effektiven Identifizierung von benachbarten Knoten in einem mobilen ad-hoc-Netzwerk im Vorfeld eines proaktiven Routing-Verfahrens - Übertragungsweg-Planungsverfahren - Verwendung, das mit dem sog. Optimized-Link-State-Routing (OLSR) - Protokoll - optimierten-Verbindungsstatus-Übertragungswegplanung-Protokoll - arbeitet.

Ausführungsbeispiele des erfindungsgemäßen Verfahrens zur effektiven Identifizierung von benachbarten Knoten in einem mobilen ad-hoc-Netzwerk und des zugehörigen erfindungsgemäßen ad-hoc-Netzwerks werden im Folgenden anhand der Zeichnung im Detail beispielhaft erläutert. Die

### Figuren der Zeichnung zeigen:

- Fig. 1: eine beispielhafte Zeitdarstellung der Nachrichten zur Signalisierung einer Anwesenheit und zugehöriger Quittierungs-Nachrichten,
- Fig. 2A: eine regionale Darstellung eines ersten Szenarios eines ad-hoc-Netzwerkes mit inner- und außerhalb des ad-hoc-Netzwerkes befindliche Knoten
- Fig. 2B: eine regionale Darstellung eines zweiten Szenarios eines ad-hoc-Netzwerkes mit inner- und außerhalb des ad-hoc-Netzwerkes befindliche Knoten,
- Fig. 2C: eine regionale Darstellung eines dritten Szenarios eines ad-hoc-Netzwerkes mit innerhalb des ad-hoc-Netzwerkes befindliche Knoten,
- Fig. 2D: eine regionale Darstellung eines vierten Szenarios eines ad-hoc-Netzwerkes mit inner- und außerhalb des ad-hoc-Netzwerkes befindliche Knoten und
- Fig. 3: ein Flussdiagramm eines Ausführungsbeispiels des erfindungsgemäßen Verfahrens zur effektiven Identifizierung von benachbarten Knoten in einem mobilen ad-hoc-Netzwerk.

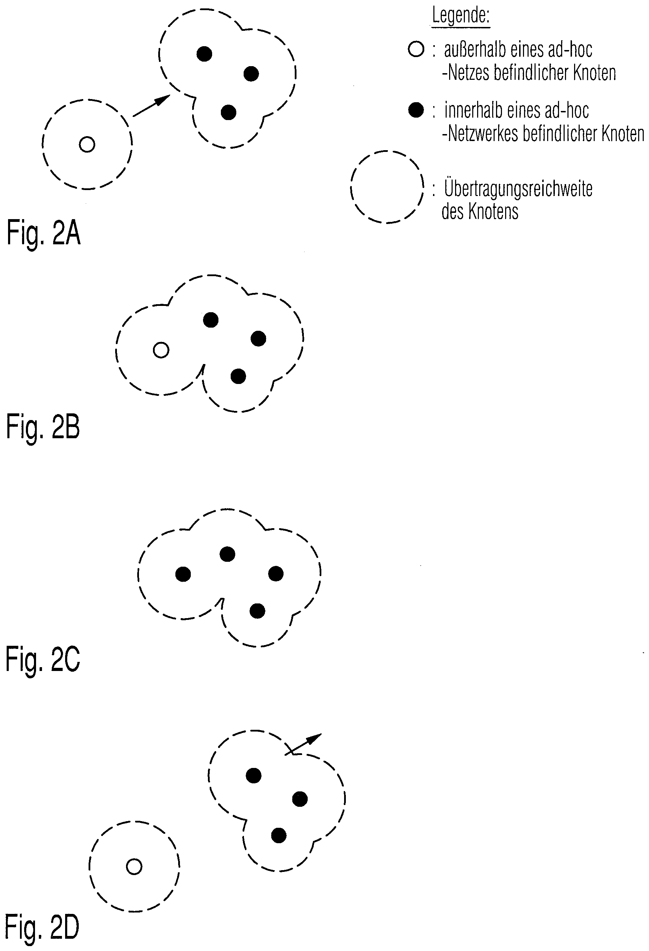

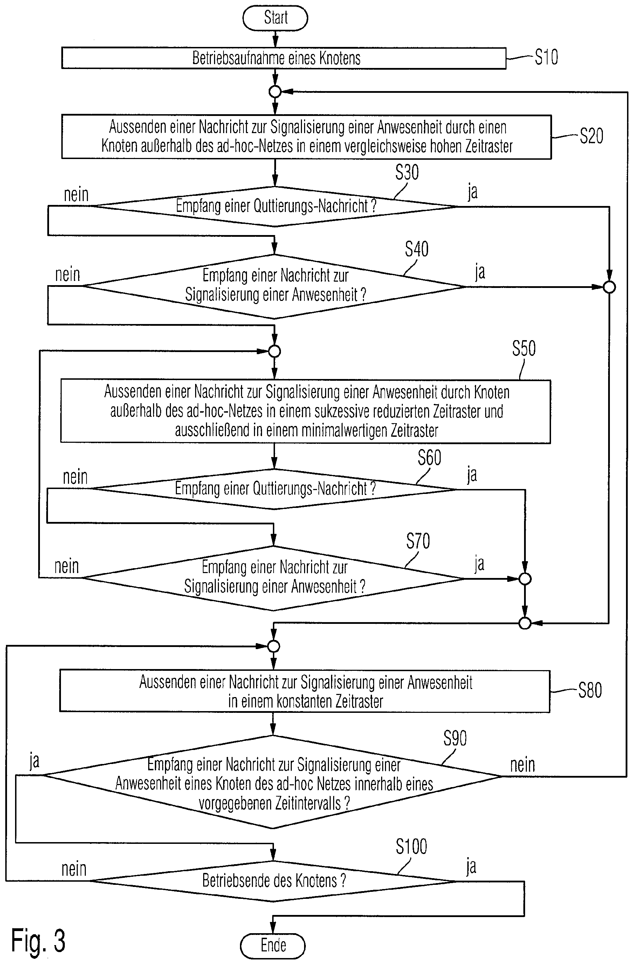

Im Folgenden wird ein Ausführungsbeispiel des erfindungsgemäßen Verfahrens zur effektiven Identifizierung von benachbarten Knoten in einem mobilen ad-hoc-Netzwerk anhand des Flussdiagramms in Fig. 3 und das zugehörige Ausführungsbeispiel des erfindungsgemäßen ad-hoc Netzwerks anhand der in den Figuren 2A bis 2D dargestellten Szenarien im Detail erläutert.

Im ersten Verfahrensschritt S10 des erfindungsgemäßen Verfahrens nimmt ein Netzknoten, beispielsweise ein Mobilfunkgerät oder ein zelluläres Funkgerät, - im folgenden kurz Knoten genannt - seinen Betrieb auf, z.B. indem der Nutzer des einen Knoten darstellenden Gerätes die Betriebsspannung einschaltet und das Gerät die üblichen Initialisierung-Routinen durchläuft. Nach Ablauf dieser Betriebsaufnahme ist der Knoten typischerweise noch in keinem ad-hoc-Netzwerk integriert.

Neben einem Knoten, der seinen Betrieb neu aufnimmt, kann äquivalent auch ein Knoten, der kurz zuvor noch in einem ad-hoc-Netzwerk integriert war und durch regionale Änderung seiner Position zum Übertragungsbereich des ad-hoc-Netzwerkes aus dem ad-hoc-Netzwerk ausgeschieden ist, sich in der Situation befinden, in keinem ad-hoc-Netzwerk mehr integriert zu sein und somit schnellstmöglich die Teilnahme in einem ad-hoc-Netzwerk anzustreben.

Hierzu sendet der außerhalb eines ad-hoc-Netzwerkes befindliche Knoten im nächsten Verfahrensschritt S20 eine Nachricht zur Signalisierung seiner Anwesenheit aus, die typischerweise eine "Hallo-Nachricht" ("hello message") ist und die Anwesenheit des Knotens in der Region den in der Region anwesenden potentiellen Nachbar-Knoten anzeigen soll. Eine derartige Nachricht zur Signalisierung einer Anwesenheit enthält typischerweise nur eine Information zur Identität des Knotens - typischerweise Identität-Nummer des Knoten - und den Sendezeitpunkt der Nachricht zur Signalisierung seiner Anwesenheit in einer lokalen Zeit des Knotens, die vorzugsweise auf eine Referenz-Zeitquelle - beispielsweise die Global-Position-System(GPS)-Zeit - referenziert ist.

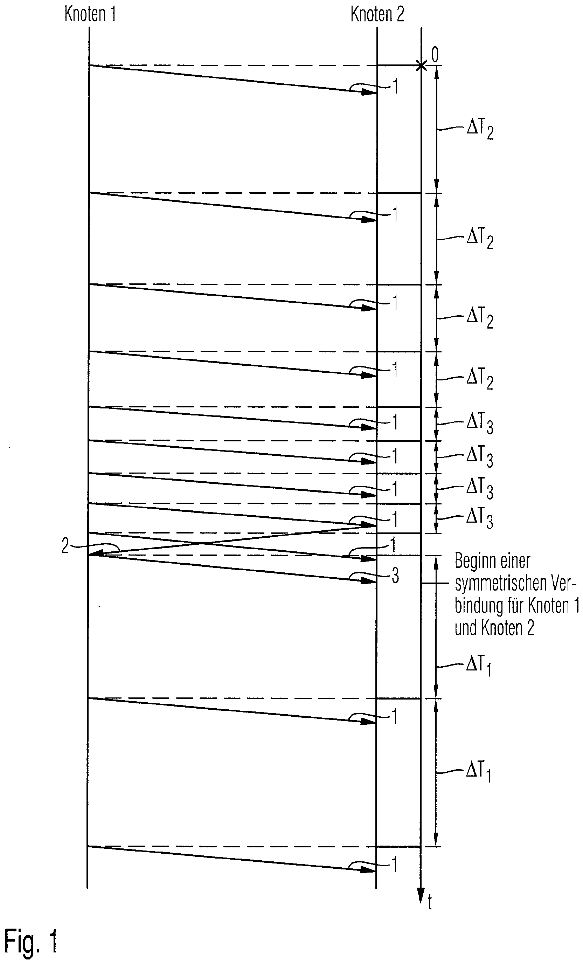

Das Zeitraster Δ*T*₂, in dem der außerhalb eines ad-hoc-Netzwerkes befindliche Knoten seine Nachrichten zur Signalisierung seiner Anwesenheit 1 aussendet, ist gemäß Fig. 1 am Beginn der Suche nach einem ad-hoc-Netzwerk vergleichsweise hoch und reduziert sich, wie aus Fig. 1 ersichtlich ist, sukzessive. Auf diese Weise ist gewährleistet, dass dem Knoten am Beginn seiner Suche nach einem ad-hoc-Netzwerk, bevor er seine erste Nachricht zur Signalisierung seiner Anwesenheit 1 aussendet, ein ausreichend langer Zeitraum zur Verfügung steht, um eine von einem potentiellen Nachbar-Knoten ausgesendete Nachricht zur Signalisierung einer Anwesenheit 1 korrekt zu empfangen. Ein korrekter Empfang einer von einem potentiellen Nachbar-Knoten ausgesendeten Nachricht zur Signalisierung einer Anwesenheit 1 parallel zur Aussendung einer Nachricht zur Signalisierung einer Anwesenheit 1 ist für einen Knoten nämlich nicht möglich, da paralleles Senden und Empfangen im Simplexverkehr nicht möglich ist.

Die höhere Priorisierung des Empfangs einer von einem potentiellen Nachbar-Knoten ausgesendeten Nachricht zur Signalisierung einer Anwesenheit 1 gegenüber dem Aussenden einer Nachricht zur Signalisierung einer Anwesenheit 1 ermöglicht den außerhalb eines ad-hoc-Netzwerkes befindlichen Knoten, sich schnellstmöglich in ein bestehendes ad-hoc-Netzwerk mit einem Nachbar-Knoten einzubinden oder schnellstmöglich ein ad-hoc-Netzwerk mit einem Nachbar-Knoten zu gründen, da die Integration des ein ad-hoc-Netzwerk suchenden Knotens mit dem Empfang einer vom Knoten gesendeten Quittierungs-Nachricht 2 auf die empfangene Nachricht zur Signalisierung einer Anwesenheit 1 beim Knoten, der die Nachricht zur Signalisierung einer Anwesenheit 1 abgesendet hat, abgeschlossen ist.

Im nächsten Verfahrensschritt S30 versucht der ein ad-hoc-Netzwerk suchende Knoten den Empfang einer Quittierungs-Nachricht 2 eines potentiellen Nachbar-Knotens zu identifizieren, die der potentielle Nachbar-Knoten beim Empfang der Nachricht zur Signalisierung einer Anwesenheit 1 dem Knoten zur Quittierung ausstrahlt. Identifiziert der Knoten den Empfang einer derartigen Quittierungs-Nachricht 2, so erkennt er, dass er in Übertragungsreichweite zu einem potentiellen Nachbar-Knoten positioniert ist. Mit Eintritt dieser Bedingung befindet sich der ein ad-hoc-Netzwerk suchende Knoten mit dem potentiellen Nachbar-Knoten bzw. mit zusätzlichen Knoten, die sich bereits in einem ad-hoc-Netz mit dem potentiellen Nachbar-Knoten befinden, in einem gemeinsamen ad-hoc-Netzwerk. Außerdem erkennt der suchende Knoten in diesem Zeitpunkt, dass eine gesicherte bidirektionale Übertragung, zwischen ihm und dem potentiellen Nachbar-Knoten vorliegt, da einerseits ein potentieller Nachbar-Knoten eine von ihm selbst ausgesendete Nachricht sicher empfangen hat und er selbst andererseits eine vom potentiellen Nachbar-Knoten ausgesendete Nachricht sicher empfangen hat.

Identifiziert der suchende Knoten den Empfang einer von einem potentiellen Nachbar-Knoten ausgestrahlten Quittierungs-Nachricht 2 auf eine vom suchenden Knoten ausgestrahlte Nachricht zur Signalisierung einer Anwesenheit 1, so befindet sich der suchende Knoten folglich in einem ad-hoc-Netzwerk und das erfindungsgemäße Verfahren wird mit dem weiter unten noch detailliert vorgestellten Verfahrensschritt S80 fortgesetzt.

Andernfalls versucht der ein ad-hoc-Netzwerk suchende Knoten im darauf folgenden Verfahrensschritt S40 den Empfang einer von einem potentiellen Nachbar-Knoten ausgestrahlten Nachricht zur Signalisierung einer Anwesenheit 1 zu identifizieren. Für den Fall, dass der suchende Knoten den Empfang einer von einem potentiellen Nachbar-Knoten ausgestrahlten Nachricht zur Signalisierung einer Anwesenheit 1 identifiziert, ist der suchende Knoten in Übertragungsreichweite eines potentiellen Nachbar-Knoten positioniert und ist somit in der Lage, mit diesem potentiellen Nachbar-Knoten und zusätzlichen Knoten, die mit diesem potentiellen Nachbar-Knoten bereits ein ad-hoc-Netzwerk bilden, ein gemeinsames ad-hoc-Netzwerk zu bilden. Somit wird er die empfangene Nachricht zur Signalisierung einer Anwesenheit 1 des potentiellen Nachbar-Knotens mit einer Quittierungs-Nachricht 2 quittieren.

Der für den suchenden Knoten absehbare Zeitpunkt des Empfangs der vom suchenden Knoten ausgestrahlten Quittierungs-Nachricht 2 durch dem potentiellen Nachbar-Knoten stellt den Beginn eines gemeinsamen ad-hoc-Netzwerkes zwischen dem suchenden Knoten und dem potentiellen Nachbar-Knoten und zusätzlichen mit dem potentiellen Nachbar-Knoten innerhalb eines bereits existierenden ad-hoc-Netzwerk verbundenen Knoten dar.

Um den Zeitpunkt des Beginns eines gemeinsamen ad-hoc-Netzwerks möglichst bald zu realisieren, wird der suchende Knoten in einer ersten Variante der Erfindung die Quittierungs-Nachricht 2 sofort nach Empfang der Nachricht zur Signalisierung einer Anwesenheit 1 des potentiellen Nachbar-Knotens absenden. In einer zweiten Variante der Erfindung wird der suchende Knoten ebenfalls die Quittierungs-Nachricht 2 möglichst zeitnah ausstrahlen, um den Zeitpunkt des Beginns des gemeinsamen ad-hoc-Netzwerkes möglichst bald zu realisieren. In dieser zweiten Variante der Erfindung wird die Quittierungs-Nachricht 2 aber um eine geringfügige, dem jeweiligen Knoten zugeordnete Verzögerungszeit Δ*T*₅ zum Empfangszeitpunkt der Nachricht zu Signalisierung einer Anwesenheit 1 des potentiellen Nachbar-Knotens verzögert, um ein gleichzeitiges Quittieren dieser empfangenen Nachricht zur Signalisierung einer Anwesenheit 1 durch andere Knoten in der Übertragungsreichweite des potentiellen Nachbar-Knotens und damit eine Blockade ad-hoc-Netzwerk zu verhindern.

Der absehbar sich in einem ad-hoc-Netzwerk befindende Knoten wird folglich verzögert um die Übertragungszeit der Quittierungs-Nachricht 2 und eine eventuell in der zweiten Variante der Erfindung benutzte statistische Verzögerungszeit mit dem weiter unten noch detailliert vorgestellten Verfahrensschritt S80 fortfahren.

Wird durch den ein ad-hoc-Netzwerk suchenden Knoten kein Empfang einer von einem potentiellen Nachbar-Knoten ausgestrahlten Nachricht zur Signalisierung einer Anwesenheit 1 identifiziert, so werden im darauf folgenden Verfahrensschritt S50 vom suchenden Knoten weitere Nachrichten zur Signalisierung einer Anwesenheit 1 in einem gemäß Fig. 1 zunehmend kleineren Zeitraster Δ*T*₂ ausgestrahlt. Die Reduzierung des Zeitrasters ist sinnvoll, da mit zunehmender Zeit, in der der nach einem ad-hoc-Netzwerk suchende Knoten keine Nachricht zur Signalisierung einer Anwesenheit empfangen hat, die Wahrscheinlichkeit für den Empfang einer von einem potentiellen Nachbar-Knoten gesendeten Nachricht zur Signalisierung einer Anwesenheit 1 abnimmt. Die Minimierung des Zeitrasters zur Aussendung einer Nachricht zur Signalisierung einer Anwesenheit 1 erfolgt solange, bis ein vorab geeignet festgelegtes minimalwertiges Zeitraster Δ*T*₃ erreicht ist. Dieses minimalwertige Zeitraster Δ*T*₃ wird so lange beibehalten, bis der suchende Knoten, wie weiter unten noch im Detail erläutert wird, in einem ad-hoc-Netzwerk integriert ist.

Nach der Aussendung einer weiteren Nachricht zur Signalisierung einer Anwesenheit 1 wird der suchende Knoten im darauf folgenden Verfahrensschritt S60 in Analogie zu Verfahrensschritt S30 versuchen, den Empfang einer von einem potentiellen Nachbar-Knoten ausgestrahlten Quittierungs-Nachricht 2 auf eine vom suchenden Knoten ausgestrahlte Nachricht zur Signalisierung einer Anwesenheit 1 zu identifizieren. Falls der suchende Knoten keinen Empfang einer Quittierungs-Nachricht 2 identifiziert, wird er im darauf folgenden Verfahrensschritt S70 in Analogie zu Verfahrensschritt S40 den Empfang einer von einem potentiellen Nachbar-Knoten ausgestrahlten Nachricht zur Signalisierung einer Anwesenheit 1 zu identifizieren versuchen. Für den Fall, dass der suchende Knoten den Empfang einer von einem potentiellen Nachbar-Knoten ausgestrahlten Nachricht zur Signalisierung einer Anwesenheit 1 nicht identifiziert, wird er gemäß Verfahrensschritt S50 eine weitere Nachricht zur Signalisierung einer Anwesenheit 1 in einem weiter reduzierten Zeitraster oder in einen minimalwertigen Zeitraster ausstrahlen.

Falls der ein ad-hoc-Netzwerk suchende Knoten entweder den Empfang einer von einem potentiellen Nachbar-Knoten ausgestrahlten Quittierungs-Nachricht 2 oder den Empfang einer von einem potentiellen Nachbar-Knoten ausgestrahlten Nachricht zur Signalisierung einer Anwesenheit 1 identifiziert hat und sich somit mit dem potentiellen Nachbar-Knoten und weiteren Knoten, die mit dem potentiellen Nachbar-Knoten bereits ein ad-hoc-Netzwerk bilden, in einem gemeinsamen ad-hoc-Netzwerk befindet, wird der suchende Knoten im darauf folgenden Verfahrensschritt S80 gemäß Fig. 1 fortlaufend wie alle anderen in einem ad-hoc-Netzwerk befindlichen Knoten eine Nachricht zur Signalisierung einer Anwesenheit 1 in einem vorab festgelegten konstanten Zeitraster Δ*T*₁ ausstrahlen.

Der sich nun in einem ad-hoc-Netzwerk befindende Knoten wird im darauf folgenden Verfahrensschritt S90 versuchen, den Empfang einer von weiteren dem ad-hoc-Netzwerk angehörenden Knoten jeweils ausgestrahlten Nachricht zur Signalisierung einer Anwesenheit 1 zu identifizieren. Wird von dem sich nun innerhalb eines ad-hoc-Netzwerks befindenden Knoten innerhalb eines vorab festgelegten Zeitintervalls Δ*T*₄ seit dem letzten Empfangszeitpunkt einer Nachricht zur Signalisierung einer Anwesenheit eines weiteren Knoten des ad-hoc-Netzwerkes keine weitere Nachricht zur Signalisierung einer Anwesenheit eines zum ad-hoc-Netzwerk gehörenden Knotens empfangen, so erkennt der Knoten, dass er sich nicht mehr innerhalb eines ad-hoc-Netzwerkes befindet.

In diesem Fall wird der sich nun außerhalb eines ad-hoc-Netzwerkes befindende Knoten auf der schnellstmöglichen Suche nach einem neuen ad-hoc-Netzwerk gemäß Verfahrensschritt S20 eine Nachricht zur Signalisierung einer Anwesenheit 1 in einem sich minimierenden Zeitraster Δ*T*₂ gemäß Fig. 1 ausstrahlen.

Empfängt der Knoten eine weitere Nachricht zur Signalisierung einer Anwesenheit dieses Knotens, so befindet er sich weiterhin in dem ad-hoc-Netzwerk. Ein Ausscheiden des sich innerhalb eines ad-hoc-Netzwerkes befindenden Knotens aus dem ad-hoc-Netzwerk ist nur im Rahmen des abschließenden Verfahrensschritt S100 möglich, wenn der Knoten seinen Betrieb beendet, z.B. indem der Nutzer des dem Knoten entsprechenden Gerätes die Betriebsspannung des Gerätes ausschaltet und das Gerät daraufhin im Rahmen von Beendungs-Routinen in einen ausgeschalteten Betriebszustand übergeht.

Wird der Betrieb des Knotens im abschließenden Verfahrensschritt S100 nicht beendet, so sendet der sich in einem ad-hoc-Netzwerk befindende Knoten gemäß Verfahrensschritt S80 eine weitere Nachricht zur Signalisierung einer Anwesenheit 1 im konstanten Zeitraster Δ*T*₁ aus.

An dieser Stelle ist anzumerken, dass nicht nur der außerhalb eines ad-hoc-Netzwerkes sich befindende und deshalb ein ad-hoc-Netzwerk suchende Knoten, sondern alle Knoten - auch die sich in einem ad-hoc-Netzwerk bereits befindenden Knoten - beschleunigt eine empfangene Nachricht zu Signalisierung einer Anwesenheit 1 durch eine Quittierungs-Nachricht 2 quittieren, d.h. also sofort nach Empfang der Nachricht zu Signalisierung einer Anwesenheit 1 gemäß der ersten Variante der Erfindung oder verzögert um eine dem jeweiligen Knoten zugewiesene statistische Verzögerungszeit Δ*T*₅ zum Empfangszeitpunkt der Nachricht zur Signalisierung einer Anwesenheit 1.

Ferner ist festzustellen, wie aus Fig. 1 hervorgeht, dass mit dem Empfangszeitpunkt der Quittierungs-Nachricht 2 der Knoten 1 weiß, dass seine zugehörige versendete Nachricht zur Signalisierung einer Anwesenheit 1 sicher vom Knoten 2 empfangen wurde und sich somit Knoten 2 sicher in der Übertragungsreichweite von Knoten 1 befindet und gleichzeitig dass er sich mit dem sicheren Empfang der Quittierungs-Nachricht 2 von Knoten 2 sicher in der Übertragungsreichweite von Knoten 2 befindet.

Knoten 2 erkennt eine gesicherte Übertragung zwischen Knoten 1 und 2 erst mit dem Empfangszeitpunkt einer weiteren Quittierungs-Nachricht 3 des Knoten 1 auf den Empfang der Quittierungs-Nachricht 2 des Knoten 2. Erst ab diesem Zeitpunkt besteht eine gesicherte symmetrische Übertragungsverbindung zwischen Knoten 1 und Knoten 2.

Aus den Figuren 2A bis 2D gehen verschiedene Szenarien eines sich verändernden ad-hoc-Netzwerkes hervor.

In Fig. 2A ist ein außerhalb der Übertragungsreichweite zu einem anderen Knoten oder zu einem bereits bestehenden ad-hoc-Netzwerkeines sich befindender Knoten - nichtgefüllter Kreis - auf der Suche nach einem ad-hoc-Netzwerk und bewegt sich auf eine Gruppe von drei Knoten - gefüllte Kreise - zu (siehe Pfeil), die sich zueinander in Übertragungsreichweite und somit innerhalb eines gemeinsamen ad-hoc-Netzwerkes befinden.

In Fig. 2B befindet sich der suchende Knoten bereits in Übertragungsreichweite des aus drei Knoten bestehenden ad-hoc-Netzes, ist aber noch nicht in das ad-hoc-Netzwerk integriert, da der Nachrichtenaustausch (Aussenden der Nachricht zur Signalisierung einer Anwesenheit und einer Quittierungs-Nachricht) zwischen dem suchenden Knoten und mindestens einem der drei in dem ad-hoc-Netzwerk integrierten Knoten noch nicht abgeschlossen ist.

In Fig. 2C ist der Nachrichtenaustausch abgeschlossen und der suchende Knoten in das ad-hoc-Netzwerk integriert.

Das Szenario in Fig. 2D stellt den Fall dar, dass der ursprünglich suchende Knoten wieder aus dem ad-hoc-Netzwerk ausgeschieden ist, da sich die ursprünglich drei im ad-hoc-Netzwerk befindlichen Knoten gemeinsam vom ursprünglich suchende Knoten regional entfernt haben (siehe Pfeil) und der ursprünglich suchende Knoten somit außerhalb der Übertragungsreichweite zu allen drei Knoten des ad-hoc-Netzwerkes positioniert ist.

Die Erfindung ist nicht auf die dargestellte Ausführungsform und die vorgestellten Varianten beschränkt. Von der Erfindung sind insbesondere alle möglichen Kombinationen aller in den Patentansprüchen beanspruchten Merkmale, aller in der Beschreibung offenbarten Merkmale und aller in den Figuren der Zeichnung dargestellt Merkmale mit abgedeckt. Insbesondere können die Merkmale der abhängigen Verfahrensansprüche auch in Kombination mit dem unabhängigen Netzwerk-Anspruch verwirklicht sein.

## Patentansprüche

1. Verfahren zur effektiven Identifizierung von benachbarten Knoten in einem mobilen ad-hoc-Netzwerk, wobei jeder Knoten in einem bestimmten Zeitraster (Δ*T*₁*, ΔT*₂, Δ*T*₃) eine Nachricht zur Signalisierung seiner Anwesenheit (1) aussendet, die von mindestens einem Knoten, der die Nachricht zur Signalisierung der Anwesenheit (1) erstmalig empfängt, durch Aussendung einer Quittierungs-Nachricht (2) quittiert wird,
**dadurch gekennzeichnet,**
**dass** das Zeitraster (Δ*T*₂, Δ*T*₃₎, in dem die Nachricht zur Signalisierung der Anwesenheit (1) ausgesendet wird, von einem Knoten, der sich außerhalb des mobilen ad-hoc-Netzwerkes befindet, variiert wird, wobei das Zeitraster (Δ*T*₂) unmittelbar nach einer Betriebsaufnahme des sich außerhalb des ad-hoc-Netzwerkes befindlichen Knotens auf einen Wert eingestellt wird, der sukzessive reduziert wird, bis ein vorab bestimmtes minimalwertiges Zeitraster (Δ*T*₃) erreicht ist.

2. Verfahren nach Anspruch 1,
**dadurch gekennzeichnet,**
**dass** ein Knoten unmittelbar, nachdem er identifiziert, dass er sich inzwischen außerhalb eines ad-hoc-Netzwerkes befindet, die Nachricht zur Signalisierung seiner Anwesenheit (1) in einem Zeitraster (Δ*T*₂) mit einem vergleichsweise hohen Wert aussendet, der sukzessive reduziert wird, bis ein vorab bestimmtes minimalwertiges Zeitraster (Δ*T*₂) erreicht ist.

3. Verfahren nach Anspruch 1 oder 2,
**dadurch gekennzeichnet,**
**dass** die Quittierungs-Nachricht (2) unmittelbar nach dem Empfang der Nachricht zur Signalisierung der Anwesenheit (1) ausgesendet wird.

4. Verfahren nach Anspruch 3,
**dadurch gekennzeichnet,**
**dass** die Quittierungs-Nachricht (2) sofort nach dem Empfang der Nachricht zur Signalisierung der Anwesenheit (1) ausgesendet wird.

5. Verfahren nach Anspruch 3,
**dadurch gekennzeichnet,**
**dass** die Quittierungs-Nachricht (2) nach dem Empfang der Nachricht zur Signalisierung der Anwesenheit (1) zuzüglich einer dem jeweiligen Knoten jeweils zugordneten statistischen Verzögerungszeit (Δ*T*₅) ausgesendet wird.

6. Verfahren nach einem der Ansprüche 1 bis 5,
**dadurch gekennzeichnet,**
**dass** ein außerhalb eines ad-hoc-Netzwerkes befindlicher Knoten ab dem Zeitpunkt des Empfangs der Quittierungs-Nachricht (2) eine Nachricht zur Signalisierung einer Anwesenheit (1) in einem vorab festgelegten konstanten Zeitraster (Δ*T*₁) absendet.

7. Verfahren nach einem der Ansprüche 1 bis 5,
**dadurch gekennzeichnet,**
**dass** ein außerhalb eines ad-hoc-Netzwerkes befindlicher Knoten ab dem Zeitpunkt des Empfangs einer Nachricht zur Signalisierung einer Anwesenheit (1) eines anderen Knotens, die er mit einem Quittierungs-Signal (2) quittiert, eine Nachricht zur Signalisierung einer Anwesenheit (1) in einem vorab festgelegten konstanten Zeitraster (Δ*T*₁) absendet.

8. Verfahren nach einem der Ansprüche 1 bis 7,
**dadurch gekennzeichnet,**
**dass** ein Knoten mit mindestens einem weiteren Knoten innerhalb eines ad-hoc-Netzwerkes integriert ist, sobald einer der beiden Knoten die Quittierungs-Nachricht (2) des jeweils anderen Knoten auf seine abgesendete Nachricht zur Signalisierung einer Anwesenheit (1) empfängt.

9. Verfahren nach einem der Ansprüche 1 bis 8,
**dadurch gekennzeichnet,**
**dass** sich ein Knoten innerhalb eines ad-hoc-Netzwerkes befindet, solange er innerhalb eines vorher festgelegten Zeitintervalls (Δ*T*₄) seit dem letzten Empfangszeitpunkt einer Nachricht zur Signalisierung einer Anwesenheit (1) eines Knoten des ad-hoc-Netzwerkes eine weitere Nachricht zur Signalisierung einer Anwesenheit (1) eines Knoten des ad-hoc-Netzwerkes empfängt.

10. Verfahren nach einem der Ansprüche 1 bis 9,
**dadurch gekennzeichnet,**
**dass** eine gesicherte und/oder verschlüsselte symmetrische Datenübertragung zwischen mindestens zwei innerhalb eines ad-hoc-Netzwerkes befindlichen Knoten vorgenommen wird, sobald einer der beiden Knoten eine weitere Quittierungs-Nachricht (3) des jeweils anderen Knoten auf seine abgesendete Quittierungs-Nachricht empfängt.

11. Verfahren nach einem der Ansprüche 1 bis 10,
**dadurch gekennzeichnet,**
**dass** die Identifizierung von benachbarten Knoten in einem mobilen ad-hoc-Netzwerk einer Übertragungsweg-Planung, bevorzugt einer Übertragungsweg-Planung nach dem optimierten-Verbindungsstatus-Übertragungswegplanungs-Protokoll, vorausgeht.

12. Netzwerk-System mit einem mobilen ad-hoc-Netzwerk mit mindestens einem inner- oder außerhalb des mobilen ad-hoc-Netzwerkes befindlichen und eine Nachricht zur Signalisierung seiner Anwesenheit (1) in einem bestimmten Zeitraster (Δ*T*₁*, ΔT*₂ *, ΔT*₃) aussendenden Knoten und mindestens einem inner- oder außerhalb des mobilen ad-hoc-Netzwerkes befindlichen, die Nachricht zur Signalisierung der Anwesenheit (1) erstmalig empfangenden und durch Aussendung einer Quittierungs-Nachricht (2) quittierenden Knoten,
**dadurch gekennzeichnet,**
**dass** das Netzwerk-System so ausgebildet ist, dass das Zeitraster (Δ*T*_{2,} Δ*T*₃) zur Aussendung der Nachricht zur Signalisierung der Anwesenheit (1) bei einem außerhalb des mobilen ad-hoc-Netzwerkes befindlichen Knoten variiert ist, wobei das Zeitraster (Δ*T*₂) unmittelbar nach einer Betriebsaufnahme des sich außerhalb des mobilen ad-hoc-Netzwerkes befindlichen Knotens auf einen Wert eingestellt ist, der eine sukzessive Reduktion erfährt, bis ein vorab bestimmtes minimalwertiges Zeitraster (Δ*T*₃) erreicht ist.

## Claims

1. Method for effective identification of neighbouring nodes in a mobile ad hoc network, wherein in a specified time frame (Δ*T*₁, Δ*T*₂, *ΔT₃*) each node sends out a message signalling its presence (1) which is acknowledged by at least one node receiving the message signalling the presence (1) for the first time by sending out an acknowledgement message (2),
**characterised in that**
the time frame (Δ*T*₂, Δ*T*₃) in which the message signalling the presence (1) is sent out is varied by a node which is located outside the mobile ad hoc network, wherein immediately after the start of operation of the node located outside the ad hoc network the time frame (Δ*T*₂) is set to a value which is successively reduced until a previously specified minimum-value time frame (Δ*T₃*) is reached.

2. Method according to claim 1,
**characterised in that**
immediately after it identifies that it is now located outside an ad hoc network, a node sends out the message signalling its presence (1) in a time frame (Δ*T*₂) with a comparatively high value which is successively reduced until a previously specified minimum-value time frame (Δ*T*₂) is reached.

3. Method according to claim 1 or 2,
**characterised in that**
the acknowledgement message (2) is sent out directly after the reception of the message signalling the presence (1).

4. Method according to claim 3,
**characterised in that**
the acknowledgement message (2) is sent out immediately after the reception of the message signalling the presence (1).

5. Method according to claim 3,
**characterised in that**
the acknowledgement message (2) is sent out after the reception of the message signalling the presence (1) with an additional statistical delay time (Δ*T*₅) associated with the respective node in each case.

6. Method according to one of claims 1 to 5,
**characterised in that**
from the point in time of reception of the acknowledgement message (2) a node located outside an ad hoc network sends off a message signalling its presence (1) in a previously fixed constant time frame (Δ*T*₁).

7. Method according to one of claims 1 to 5,
**characterised in that**
from the point in time of reception of a message signalling the presence (1) of another node which it acknowledges with an acknowledgement message (2), a node located outside an ad hoc network sends off a message signalling its presence (1) in a previously fixed constant time frame (Δ*T*₁).

8. Method according to one of claims 1 to 7,
**characterised in that**
a node is integrated with at least one further node inside an ad hoc network as soon as one of the two nodes receives the acknowledgement message (2) of the respective other node in response to the message signalling its presence (1) that it sent out.

9. Method according to one of claims 1 to 8,
**characterised in that**
a node is located inside an ad hoc network as long as it receives a further message signalling the presence (1) of a node of the ad hoc network within a previously fixed interval of time (Δ*T₄*) from the last point in time of reception of a message signalling the presence (1) of a node of the ad hoc network.

10. Method according to one of claims 1 to 9,
**characterised in that**
secured and/or encrypted symmetrical transmission of data is carried out between at least two nodes located inside an ad hoc network as soon as one of the two nodes receives a further acknowledgement message (3) from the respective other node in response to the acknowledgement message that it sent off.

11. Method according to one of claims 1 to 10,
**characterised in that**
the identification of neighbouring nodes in a mobile ad hoc network precedes transmission route planning, preferably transmission route planning according to the optimised connection status transmission route planning protocol.

12. Network system with a mobile ad hoc network with at least one node located inside or outside the mobile ad hoc network sending out a message signalling its presence (1) in a specified time frame (Δ*T*₁, Δ*T*₂, Δ*T*₃) and at least one node located inside or outside the mobile ad hoc network receiving the message signalling the presence (1) for the first time and acknowledging it by sending out an acknowledgement message (2),
**characterised in that**
the network system is configured so that the time frame (Δ*T*₂, Δ*T*₃) for sending out the message signalling the presence (1) in the case of a node located outside the mobile ad hoc network is varied, wherein directly after the start of operation of the node located outside the mobile ad hoc network the time frame (Δ*T*₂) is set to a value which is successively reduced until a previously defined minimum-value time frame (Δ*T*₃) is reached.

## Revendications

1. Procédé d'identification efficace de noeuds voisins dans un réseau ad hoc mobile, dans lequel chaque noeud envoie dans une trame temporelle (Δ*T*₁*,* Δ*T*₂, Δ*T*₃) définie un message de signalisation de sa présence (1), dont au moins un noeud, qui reçoit pour la première fois le message de signalisation de la présence (1), en accuse réception par envoi d'un message d'accusé réception (2),
**caractérisé**
**en ce que** la trame temporelle (Δ*T*₂, Δ*T*₃), dans laquelle le message de signalisation de la présence (1) est envoyé, est modifiée par un noeud qui se situe à l'extérieur du réseau ad hoc mobile, dans lequel la trame temporelle (Δ*T*₂) est réglée, immédiatement après une mise en service du noeud situé à l'extérieur du réseau ad hoc, sur une valeur qui est réduite successivement jusqu'à ce qu'une trame temporelle (Δ*T*₃) de valeur minimale préalablement définie soit atteinte.

2. Procédé selon la revendication 1,
**caractérisé**
**en ce qu'**un noeud envoie immédiatement, après avoir identifié qu'il se situe désormais à l'extérieur d'un réseau ad hoc, le message de signalisation de sa présence (1) dans une trame temporelle (Δ*T*₂), avec une valeur relativement élevée qui est réduite successivement jusqu'à ce qu'une trame temporelle (Δ*T*₂) de valeur minimale préalablement définie soit atteinte.

3. Procédé selon la revendication 1 ou 2,
**caractérisé**
**en ce que** le message d'accusé réception (2) est envoyé immédiatement après la réception du message de signalisation de la présence (1).

4. Procédé selon la revendication 3,
**caractérisé**
**en ce que** le message d'accusé réception (2) est envoyé immédiatement après la réception du message de signalisation de la présence (1).

5. Procédé selon la revendication 3,
**caractérisé**
**en ce que** le message d'accusé réception (2) est envoyé après la réception du message de signalisation de la présence (1), à laquelle s'ajoute un temps de retard statistique (Δ*T*₅) associé respectivement au noeud respectif.

6. Procédé selon l'une quelconque des revendications 1 à 5,
**caractérisé**
**en ce qu'**un noeud situé à l'extérieur d'un réseau ad hoc envoie, à partir du moment de la réception du message d'accusé réception (2), un message de signalisation d'une présence (1) dans une trame temporelle (Δ*T*₁) constante préalablement déterminée.

7. Procédé selon l'une quelconque des revendications 1 à 5,
**caractérisé**
**en ce qu'**un noeud situé à l'extérieur d'un réseau ad hoc envoie, à partir du moment de la réception d'un message de signalisation d'une présence (1) d'un autre noeud, dont il a accusé réception au moyen d'un signal d'accusé réception (2), un message de signalisation d'une présence (1) dans une trame temporelle (Δ*T*₁) constante préalablement déterminée.

8. Procédé selon l'une quelconque des revendications 1 à 7,
**caractérisé**
**en ce qu'**un noeud est intégré avec au moins un autre noeud à l'intérieur d'un réseau ad hoc, dès que l'un des deux noeuds reçoit le message d'accusé réception (2) de l'autre noeud respectif sur son message envoyé de signalisation d'une présence (1).

9. Procédé selon l'une quelconque des revendications 1 à 8,
**caractérisé**
**en ce qu'**un noeud se situe à l'intérieur d'un réseau ad hoc tant qu'il reçoit à l'intérieur d'un intervalle de temps (Δ*T*₄) préalablement déterminé, depuis le dernier moment de réception d'un message de signalisation d'une présence (1) d'un noeud du réseau ad hoc, un autre message de signalisation d'une présence (1) d'un noeud du réseau ad hoc.

10. Procédé selon l'une quelconque des revendications 1 à 9,
**caractérisé**
**en ce qu'**une transmission de données symétrique sécurisée et/ou cryptée est réalisée entre au moins deux noeuds situés à l'intérieur d'un réseau ad hoc, dès que l'un des deux noeuds reçoit un autre message d'accusé réception (3) de l'autre noeud respectif sur son message d'accusé réception envoyé.

11. Procédé selon l'une quelconque des revendications 1 à 10,
**caractérisé**
**en ce que** l'identification de noeuds voisins dans un réseau ad hoc mobile précède une planification de trajet de transmission, de préférence une planification de trajet de transmission selon le protocole de planification de trajet de transmission d'état de liaison optimisé.

12. Système de réseau comprenant un réseau ad hoc mobile pourvu d'au moins un noeud situé à l'intérieur ou à l'extérieur du réseau ad hoc mobile et envoyant un message de signalisation de sa présence (1) dans une trame temporelle (Δ*T*₁, Δ*T*₂, Δ*T*₃) définie, et d'au moins un noeud situé à l'intérieur ou à l'extérieur du réseau ad hoc mobile, recevant pour la première fois le message de signalisation de la présence (1), et en accusant réception par envoi d'un message d'accusé réception (2),
**caractérisé**
**en ce que** le système de réseau est conçu de telle manière que la trame temporelle (Δ*T*₂, Δ*T*₃) pour l'envoi du message de signalisation de la présence (1) est modifiée lorsqu'un noeud se situe à l'extérieur du réseau ad hoc mobile, dans lequel la trame temporelle (Δ*T*₂) est réglée, immédiatement après une mise en service du noeud situé à l'extérieur du réseau ad hoc mobile, sur une valeur qui connaît une réduction successive jusqu'à ce qu'une trame temporelle (Δ*T*₃) de valeur minimale préalablement déterminée soit atteinte.
